# EUROPEAN PATENT APPLICATION

(11) **EP 1 251 508 A2**
(43) Date of publication of application: **23.10.2002**
(21) Application number: 02008663.3
(22) Date of filing: 17.04.2002
(51) Int. Cl.: G11B 20/12, G11B 20/18

(54) **Information recording medium, information recording apparatus, and information playback apparatus**

(30) Priority: 17.04.2001 JP 2001118519
(71) Applicant: Kabushiki Kaisha Toshiba, Tokyo 105-8001 (JP)
(72) Inventor: Takahashi, Hideki, c/oK.K. Toshiba, Int. Prop. Div, Tokyo 105-8001 (JP)
(74) Representative: Henkel, Feiler, Hänzel

(57) **Abstract**

An information recording medium according to an embodiment of this invention includes an overwritable count information area (OA1) for recording overwritable count information representing an allowable number of times of overwrite.

## Description

The present invention relates to an information recording medium capable of recording information. The present invention also relates to an information recording apparatus for recording information on an information recording medium. The present invention also relates to an information playback apparatus for playing back information from an information recording medium.

In recent years, rewritable information recording media such as DVD (Digital Video Disk)-RAMs characterized by high-density recording have been extensively studied. DVD-RAMs that are being developed have specifications including an overwritable count of 100,000 times.

As described above, the overwritable count of a DVD-RAM is 100,000 times. However, for, e.g., AV recording, the rewritable count of 100,000 times is not always necessary and can be 1,000 times or less. For backup, even "write-once" is sufficient. It is relatively difficult to increase the overwritable count. This results in an increase in manufacturing cost of the medium. However, the overwrite characteristic is not so important for some application purposes. That is, a disk having a characteristic according to a purpose, i.e., a disk with good cost balance is desired. Conventionally, for example, DVDs with required characteristics, such as a DVD-RAM, DVD-RW, and DVD-R, are implemented by employing different disk formats. However, when the disk formats are different, the load on the drive side becomes large.

It is an object of the present invention to provide an information recording medium capable of contributing to solving the above-described problems.
(1) An information recording medium according to an aspect of the present invention comprises an overwritable count information area that stores overwritable count information representing an allowable number of times of overwrite.
(2) An information recording apparatus according to an aspect of the present invention comprises a recording section configured to record information on an information recording medium, and a recording instruction section configured to instruct recording of overwrite count information in an overwrite count information area included in the information recording medium upon overwrite.
(3) An information playback apparatus according to an aspect of the present invention comprises a playback section configured to play back information from an information recording medium, and a first playback instruction section configured to instruct playback of overwritable count information recorded in an overwritable count information area included in the information recording medium.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing the layout of a lead-in area, data area, lead-out area, and the like on an optical disk;
FIG. 2 is a view showing the data structure of a sector field on the optical disk;
FIG. 3 is a view showing the structure of ECC block data;
FIG. 4 is a view showing the data structure of sector data recorded on a data field;
FIG. 5 is a view showing the data structure of the entire optical disk and, more particularly, various kinds of areas related to defect management, which are arranged in the lead-in area, data area, and lead-out area;
FIG. 6 is a view showing the data structures of a DMA address area;
FIG. 7 is a view for explaining a slipping replacement process;
FIG. 8 is a view for explaining a linear replacement process;
FIG. 9 is a view showing the data structure on the optical disk and, more especially, the layout of a DMA (Defect Management Area), overwritable count information area, and overwrite count information area;
FIG. 10 is a view showing the relationship between a host apparatus, optical disk drive, and optical disk;
FIG. 11 is a block diagram showing the schematic arrangement of an information recording/playback apparatus;
FIG. 12 is a table showing the characteristic features of optical disks with different recording characteristics; and
FIG. 13 is a table showing the operations of optical disks with different recording characteristics.

An embodiment of the present invention will be described below with reference to the accompanying drawing.

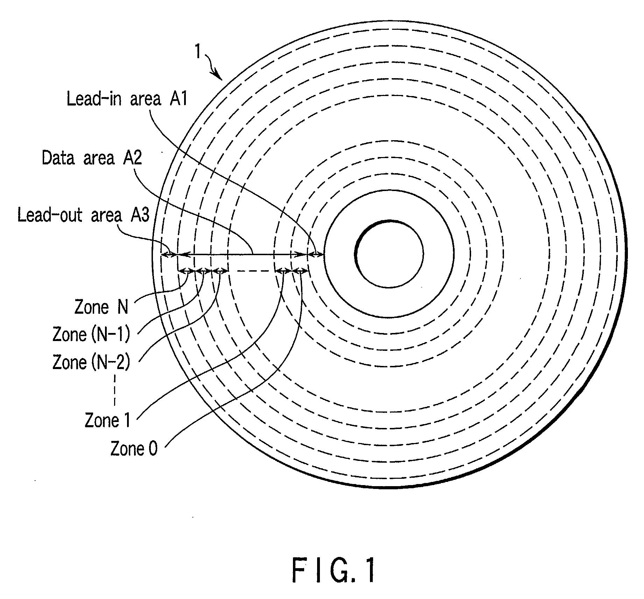

An optical disk (DVD-RAM disk) 1 serving as an information recording medium will be described first with reference to FIG. 1.

FIG. 1 shows the layout of a lead-in area, data area, lead-out area, and the like on an optical disk.

As shown in FIG. 1, a lead-in area A1, data area A2, and lead-out area A3 are assured on an optical disk 1 in turn from the inner periphery side. The lead-in area A1 includes an emboss data zone, mirror zone (non-recording zone), and rewritable data zone. The data area A2 includes a rewritable data zone, which includes a plurality of zones 0 to N. The lead-out area A3 includes a rewritable data zone.

On the emboss data zone in the lead-in area A1, a reference signal and control data are recorded as a embossed pattern upon manufacturing the optical disk 1. On the rewritable data zone in the lead-in area A1, identification data for identifying the type of disk, defect management data for managing defective areas, and the like are recorded. Note that an area where the defect management data is recorded will be referred to as a DMA (Defect Management Area) hereinafter.

In addition, at least one of the emboss data zone and rewritable data zone of the lead-in area A1 has an overwritable count information area OA1. This overwritable count information area OA1 stores overwritable count information representing the allowable number of times of overwrite. The DMA has an overwrite count information area OA2. This overwrite count information area OA2 stores overwrite count information representing the actual number of times of overwrite. The same data as that recorded in the rewritable data zone of the lead-in area A1 is recorded in the rewritable data zone of the lead-out area A3.

Each of the rewritable data zone in the lead-in area A1 and zone 0 of the rewritable data zone in the data area A2 consists of X tracks, each of which consists of Y sector fields. This zone is processed at a rotational speed Z0 (Hz).

Zone 1 of the rewritable data zone in the data area A2 consists of X tracks, each of which consists of (Y+1) sector fields. This zone is processed at a rotational speed Z1 (Hz).

Zone 2 of the rewritable data zone in the data area A2 consists of X tracks, each of which consists of (Y+2) sector fields. This zone is processed at a rotational speed Z2 (Hz) (Z1 > Z2).

Each of zones 3 to N of the rewritable data zone in the data area A2 consists of X tracks. Each track in zone 3 consists of (Y+3) sector fields, and each track in zone 4 consists of (Y+4) sector fields. That is, each track in zone N consists of (Y+N) sector fields. Zone 3 is processed at a rotational speed Z3 (Hz) (Z2 > Z3), and zone 4 is processed at a rotational speed Z4 (Hz) (Z3 > Z4). That is, zone N is processed at a rotational speed ZN (Hz) (Z(N-1) > ZN).

The rewritable data zone in the lead-out area A3 consists of a plurality of tracks, each of which consists of (Y+N) sector fields. This zone is processed at a rotational speed ZN (Hz).

As described above, the number of sector fields per track increases and the rotational speed lowers in turn from the zones on the inner periphery side of the optical disk 1. That is, the optical disk 1 is compatible with the ZCLV (Zone Constant Linear Velocity) scheme.

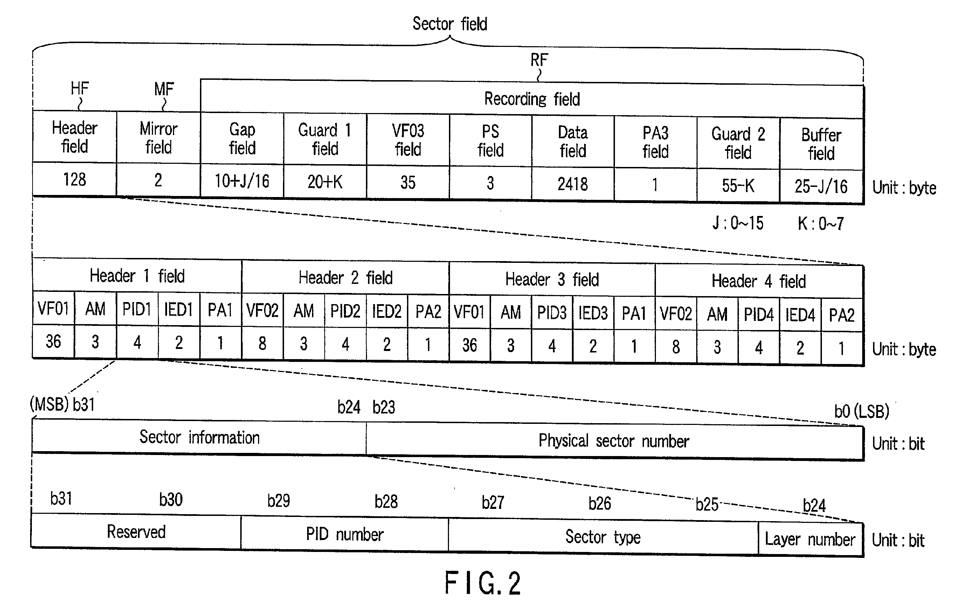

Subsequently, the format of a sector field on the DVD-RAM disk will be explained below with reference to FIG. 2.

As shown in FIG. 2, one sector field consists of nearly 2,697 bytes. This sector field records data modulates by 8-16 modulation. 8-16 modulation modulates an 8-bit input code sequence into a 16-bit output code sequence. The input code sequence is called input bits, and the output code sequence channel bits. Note that 1 byte means 16 channel bits.

The contents of one sector field will be explained below. One sector field is constructed by a 128-byte header field HF, 2-byte mirror field MF, and 2,567-byte recording field RF.

The header field HF records header data as an embossed pattern in the manufacturing process of the optical disk. In this header field HF, header data is written four times to improve detection precision of header data. That is, this header field HF contains a header 1 field, header 2 field, header 3 field, and header 4 field. Each of the header 1 field and header 3 field consists of 46 bytes. Each of the header 2 field and header 4 field consists of 18 bytes.

The header 1 field contains 36-byte VFO (Variable Frequency Oscillator) 1, 3-byte AM (Address Mark), 4-byte PID (Physical ID) 1, 2-byte IED (ID Error Detection Code) 1, and 1-byte PA (Post Ambles) 1.

The header 2 field contains 8-byte VFO2, 3-byte AM, 4-byte PID2, 2-byte IED2, and 1-byte PA2.

The header 3 field contains 36-byte VFO1 3-byte AM, 4-byte PID3, 2-byte IED3, and 1-byte PA1.

The header 4 field contains 8-byte VFO2 3-byte AM, 4-byte PID4, 2-byte IED4, and 1-byte PA2.

Each of the PID1, PID2, PID3, and PID4 contains sector information and a physical sector number (physical address). Each of the VFO1 and VFO2 contains a continuous repetitive pattern (100010001000···) for a PLL (Phase Locked Loop) process. The AM contains a special mark (address mark) which violates a constraint length for indicating the PID position. Each of the IED1, IED2, IED3, and IED4 contains an error detection code for detecting a PID error. The PA contains state information required for demodulation, and also has a role of polarity adjustment to terminate the header field HF with a space. The mirror field MF stores mirror data.

The recording field RF records user data. The recording field contains a (10+J/16)-byte gap field, (20+K(-byte guard 1 field, 35-byte VFO3 field, 3-byte PS (pre-synchronous code) field, 2,418-byte data field (user data field), 1-byte post amble PA3 field, (55-K)-byte guard 2 field, and (25-J/16)-byte buffer field. Note that J assumes a random integer ranging from 0 to 15, and K assumes a random integer ranging from 0 to 7. In this manner, the data write start position is randomly shifted. As a result, deterioration of a recording film due to overwrite can be minimized.

The gap field records no data. The guide 1 field is a sacrificed area for absorbing leading edge deterioration caused by repetitive overwrite processes, which is unique to a phase-change recording film. The VFO3 field is a PLL lock field, and also has a roll of synchronizing byte boundaries by inserting a synchronous code in identical patterns. The PS code records a synchronous code.

The data field records a data ID, IED (Data ID Error Detection Code), synchronous code, ECC (Error Correction Code), EDC (Error Detection Code), 2,048-byte user data, and the like. The data ID contains a logical sector number (logical address). The IED is a 2-byte (16-bit) error correction code for the data ID.

The PA3 field contains state information required for demodulation, and indicates the end of the last byte in the previous data field. The guard 2 field prevents trailing edge deterioration upon repetitive recording, which is also unique to a phase-change recording medium, from influencing the data field. The buffer field absorbs variations of rotation of a motor for rotating the optical disk 1 and the like to prevent the data field from overlapping the next header field.

The PID1, PID2, PID3, and PID4 will be explained in detail below. Each of these PIDs contains 8-bit sector information, and a 24-bit physical sector number. The physical sector number records address data indicating the absolute position of the sector field. The sector information contains information such as a 2-bit reserved area, 2-bit physical ID number, 3-bit sector type, 1-bit layer number, and the like. The reserved area is a non-recording area.

The physical ID numbers in the header 1, 2, 3, and 4 fields record "00", "01", "10", and "11" indicating the PID1, PID2, PID3, and PID4, respectively.

The sector type records "000" or "011" indicating a reserved sector; "100" indicating a rewritable first sector in a track; "101 indicating a rewritable last sector in a track; "110" indicating a rewritable last but one sector in a track; or "111" indicating a rewritable other sector in a track.

The layer number records "0" indicating layer 0, or "1" indicating "reserved".

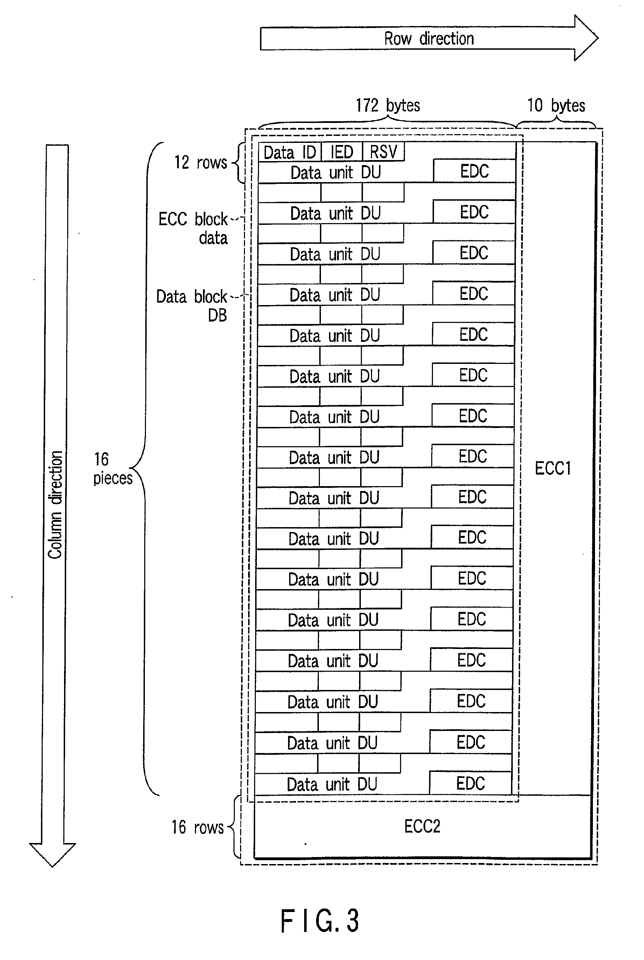

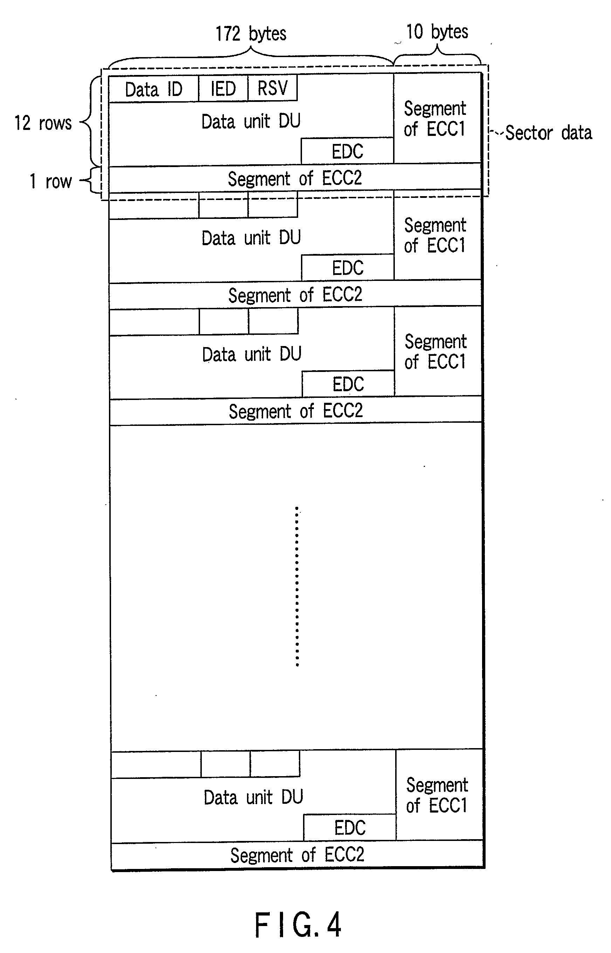

The data structures of the ECC block data and sector data will be explained below with reference to FIGS. 3 and 4. FIG. 3 shows the data structure of the ECC block data. FIG. 4 shows the data structure of the sector data recorded in the data field shown in FIG. 2.

Tracks are formed on a DVD-RAM, and a plurality of sector fields are formed in each track. In other words, a plurality of successive sector fields form a track. The DVD-RAM records data in a format called ECC block data. Strictly speaking, 16 sector data generated based on the ECC block data are distributed and recorded in 16 sector fields. In addition, a group of sector data is recorded in the 2,418-byte data field shown in FIG. 2.

As shown in FIG. 3, the ECC block data consists of a data block DB (user data, and the like), ECC1, and ECC2.

The data block DB is constructed by an array of data which has a predetermined number of rows and columns, and can be segmented into 16 data units. More specifically, the data block DB is constructed by 172 (bytes) × 12 (the number of rows forming each data unit) × 16 (the number of data units forming the data block) data. Each data unit DU is constructed by 172 (bytes) × 12 (the number of rows forming each data unit) data. Each data unit DU contains a data ID, IED, EDC, 2,048-byte user data, and the like. The data ID is used for scrambling user data contained in the data unit DU. The EDC is used for detecting any error contained in a set of data in the data unit.

The ECC1 is used for correcting LRC errors in the data block DB. More specifically, the ECC1 is constructed by 10 (bytes) × 12 (the number of rows forming each data unit DU) × 16 (the number of data units forming the data block) data. This ECC1 has error correction performance that normally corrects errors up to 5 bytes, and corrects errors up to 10 bytes upon erasure correction.

The ECC2 is used for correcting VRC errors in the data block DB. More specifically, the ECC2 is constructed by {172 (bytes) + 10 (bytes)} × 16 (the number of data units forming the data block) data. This ECC2 has error correction performance that normally corrects errors up to 8 bytes, and corrects errors up to 16 bytes upon erasure correction.

The sector data will be explained below with the aid of FIG. 4.

Sixteen sector data are generated from one ECC block data. One sector data consists of a data unit DU, a segment of the LRC error correction code ECC1, and a segment of the VRC error correction code ECC2, which is assigned to this data unit DU. More specifically, the sector data is composed of {172 (bytes) + 10 (bytes)} × {12 (the number of rows forming each data unit DU) + 1 (for one column of the VRC error correction code ECC2)} data.

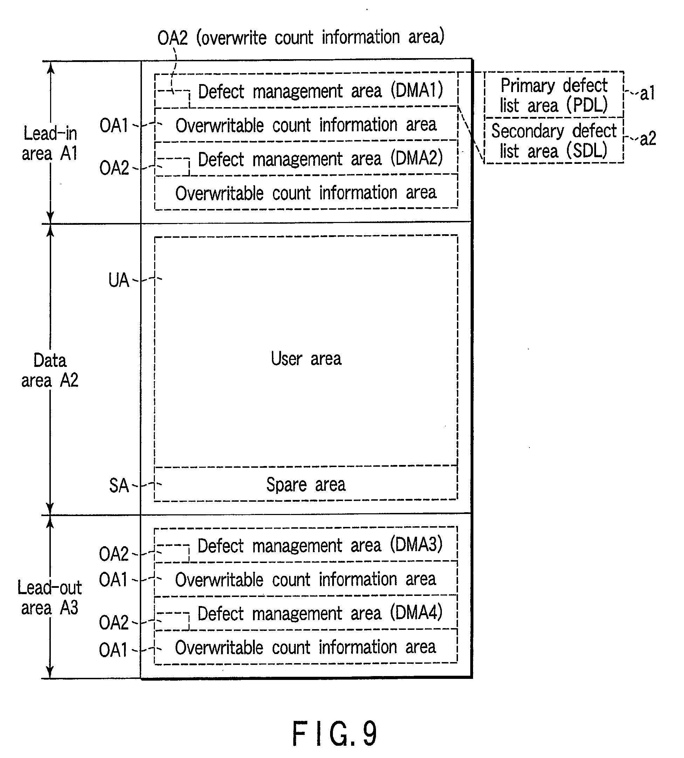

The data structure of the DMA will be described next with reference to FIG. 9.

A total of four DMAs are arranged on the optical disk. Identical data is recorded in these defect management areas. Two (DMA1 and DMA2) of the four defect management areas (DMA1 to DMA4) are arranged in the lead-in area. The remaining two defect management areas (DMA3 and DMA4) are arranged in the lead-out area.

Each of the DMAs (DMA1 to DMA4) includes a PDLA (Primary Defect List Area) a1 and SDLA (Secondary Defect List Area) a2. Note that a Primary Defect is also called a first-stage defect. The PDLA a1 has a plurality of PDLs (Primary Defect Lists) as entries. The SDLA a2 has a plurality of SDLs (Secondary Defect Lists) as entries. Size information representing the size (range) of a spare area is also stored in the DMA. For example, the size information is stored in the SDL. The size information contains, e.g., the physical address number of the first sector and the physical address number of the final sector of the spare area, or the physical address number of the first sector of the spare area and the length of the spare area.

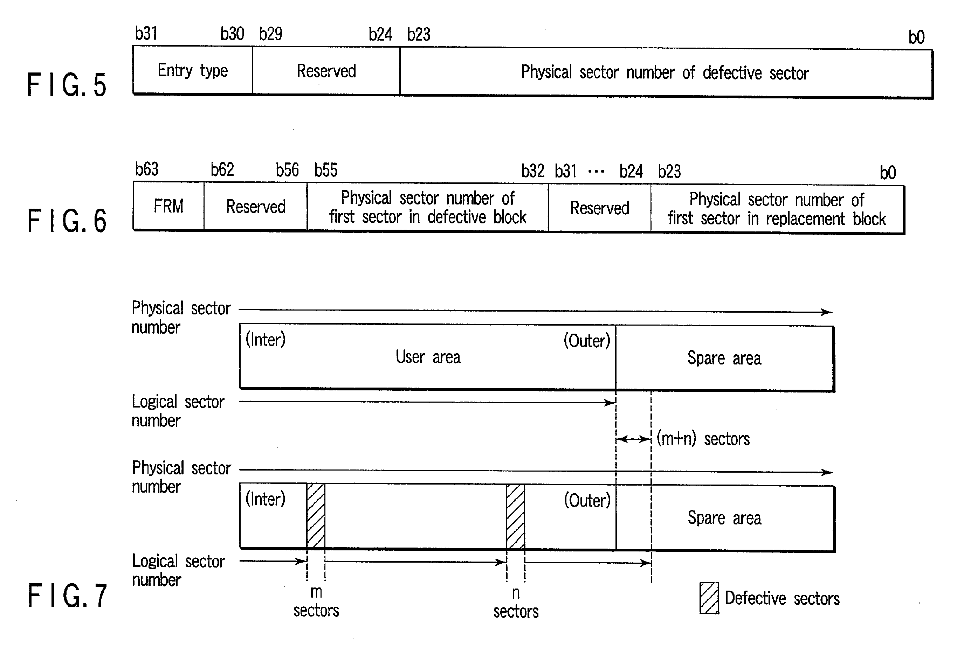

FIG. 5 is a view showing the schematic data structure of the PDL as an entry in the PDLA a1. FIG. 6 is a view showing the schematic data structure of the SDL as an entry in the SDLA a2.

As shown in FIG. 5, a PDL includes sequentially from the start an area where an entry type is recorded, a reserved area, and an area where the physical sector number of a defective sector (that indicates a sector field with a defect) is recorded.

As shown in FIG. 6, an SDL includes sequentially from the start an area where an assignment mark (FRM) is recorded, a reserved area, an area where the physical sector number of the first sector (that indicates a first sector field in 16 sector fields of a defective block) in a defective block is recorded, a reserved area, and the physical sector number of the first sector (that indicates a first sector field in 16 sector fields of a replacement block) in a replacement block.

A replacement process will be explained below. The replacement process includes a slipping replacement process and a linear replacement process. The slipping replacement process is done for primary defects in units of sector fields. The linear replacement process is done for secondary defects in units of ECC block data. These processes will be described in detail below.

The slipping replacement process will be explained first.

Before delivery of an optical disk, it is certified if the rewritable data zone on the optical disk suffers defects (primary defects). That is, it is certified if data can be normally recorded in the rewritable data zone. This certification is done in units of sector fields.

During the certification, if a defective sector (indicating a sector field including defects) is found, the physical sector number of this defective sector is recorded in the PDL. Furthermore, no logical sector number is assigned to this defective sector. More specifically, logical sector numbers are assigned to only normal sectors (indicating sector fields free from any defects) allocated before and after this defective sector by ignoring the defective sector. That is, the defective sector is considered as a non-existing sector. In this manner, user data or the like is prevented from being written in such defective sector. A series of processes mentioned above are done in the slipping replacement process. Thus, the defective sectors are slipped in this slipping replacement process.

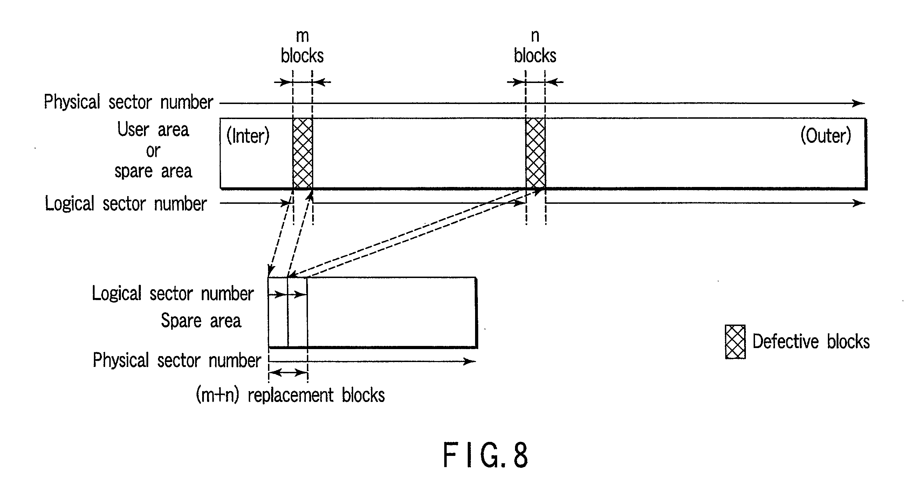

The slipping replacement process will be described in more detail with reference to FIG. 8.

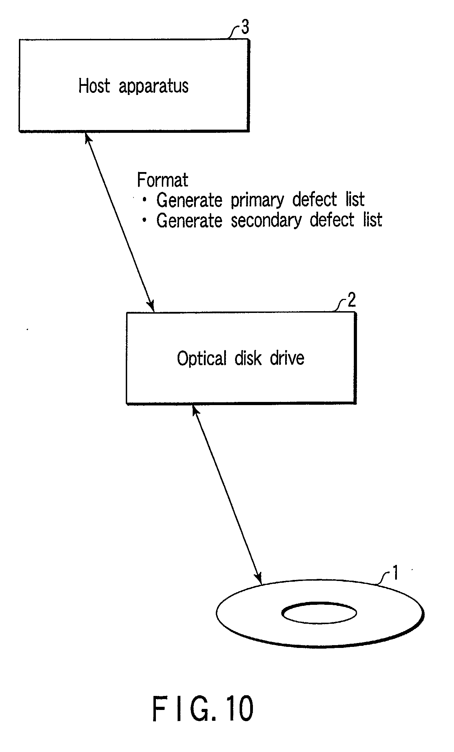

Assume that a user area (a user area UA shown in FIG. 10) and a spare area (a spare area SA shown in FIG. 10) are present, as shown in FIG. 8. Also, these user and spare areas are present in any of zones 0 to N described above with reference to FIG. 1.

For example, if m defective sectors and n defective sectors are found during certification, the (m+n) defective sectors are compensated for by the spare area. That is, the sectors contained in those constructing the user area shown in the upper illustration in FIG. 9 are compensated for by the spare area. As described above, no logical sector numbers are assigned to the m and n defective sectors. In addition, the spare area also undergoes a slipping replacement process. Hence, if any defective sector is found in the spare area, it is processed by the aforementioned slipping replacement process. Note that all sectors have physical sector numbers irrespective of defective or normal sectors.

Second, the linear replacement process will be explained.

When user data is written after delivery of an optical disk, it is verified if the user data is normally written. A situation that user data cannot be normally written is called a secondary defect. The presence/absence of secondary defects is verified in units of 16 sector fields (i.e., in units of blocks) each of which records the ECC block data shown in FIG. 3.

If a defective block (indicating a block including secondary defects) is found, the physical sector number of the first sector in the defective block and the physical sector number of the first sector in a replacement block (indicating a block to be assured in the spare area) that is to replace the defective block are recorded in the SDL. Also, the logical sector numbers assigned to 16 sector fields in the defective block are assigned to 16 sector fields in the replacement block. In this manner, data to be recorded in the defective block is recorded in the replacement block. After that, access to the defective block is considered as that to the replacement block. A series of processes mentioned above are done in the linear replacement process. That is, in this linear replacement process, a defective block is linearly replaced.

The linear replacement process will be described in more detail below with reference to FIG. 9.

Assume that a user area and a spare area are present, as shown in FIG. 9. Also, these user and spare areas are present in any of zones 0 to N described above with reference to FIG. 1.

For example, if m defective blocks and n defective blocks are found upon writing user data, (m+n) defective blocks are compensated for by (m+n) replacement blocks in the spare area. As described above, the physical sector numbers assigned to {16 × (m+n)} sector fields that build the m and n defective blocks are passed onto those that build (m+n) replacement blocks. In addition, the spare area also undergoes a linear replacement process. Hence, if any defective block is found in the spare area, it is processed by the aforementioned linear replacement process. Note that all sector fields that make up the block have physical sector numbers irrespective of a defective or normal block.

User data write processes corresponding to the slipping replacement process and linear replacement process will be explained below.

User data is written in the user area based on the PDL and SDL. That is, when user data is written in a given sector field, if this sector field is registered in the PDL, user data is written in a normal sector field next to this defective sector by slipping it. When a write block of user data is a defective block registered in the SDL, the user data is written in a replacement block corresponding to that defective block.

The format of an optical disk will be described below.

In a FAT (file allocation table) prevalently used in file systems of information storage media (hard disks, magnetooptical disks, and the like) for personal computers, information is recorded on an information recording medium to have 256 or 512 bytes as a minimum unit.

By contrast, in information storage media such as a DVD-video, DVD-ROM, DVD-R, DVD-RAM, and the like, a UDF (universal disk format) specified by OSTA and ISO13346 are used as a file system. In this case, information is recorded on an information recording medium to have 2,048 bytes as a minimum unit. The file management method is basically premised on a hierarchical file system which manages files in a tree pattern to have a root directory as a parent directory.

As shown in FIG. 10, the optical disk 1 is formatted by the optical disk drive 2 connected to the host apparatus 3. The host apparatus 3 issues various kinds of instructions to the optical disk drive 2. The optical disk drive 2 executes various kinds of operations in accordance with instructions sent from the host apparatus 3.

For example, as shown in FIG. 10, when a format execution instruction is sent from the host apparatus 3 to the optical disk drive 2, the optical disk drive 2 formats the optical disk 1 in accordance with the instruction. That is, the optical disk 1 obtains a predetermined format according to the instruction from the host apparatus 3. Upon formatting, for example, a PDL and SDL are formed in the DMA arranged in the lead-in area A1 of the optical disk 1. That is, data for forming a PDL and SDL are transmitted from the host apparatus 3 to the optical disk drive 2. The optical disk drive 2 stores the data for forming the lists and forms them in the DMA of the optical disk 1 in accordance with the stored data.

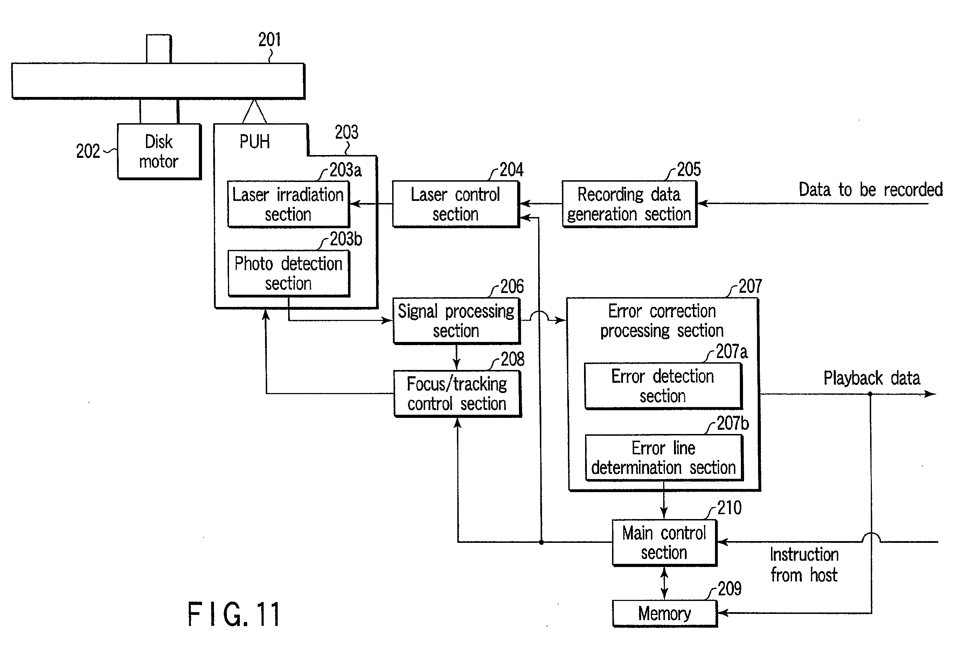

The schematic arrangement of an information recording/playback apparatus (optical disk drive 2) will be described below with reference to FIG. 11. The information recording/playback apparatus shown in FIG. 11 records predetermined data on the optical disk 1 corresponding to the information recording medium of the present invention or plays back information recorded on the optical disk 1. The information recording/playback apparatus comprises a disk motor 202, PUH (PickUp Head) 203, laser control section 204, recording data generation section 205, signal processing section 206, error correction processing section 207, focus/tracking control section 208, memory 209, main control section 210, and the like.

The disk motor 202 rotates the optical disk 1 at a predetermined rotational speed. The PUH 203 has a laser irradiation section 203a and photodetection section 203b. The laser irradiation section 203a selectively irradiates the optical disk with one of a recording light beam and playback light beam that have different irradiation powers. The photodetection section 203b detects reflected light, from the optical disk, of the light beam emitted from the laser irradiation section 203a. The laser control section 204 ON/OFF-controls the laser irradiation section 203a and also controls the irradiation power of the light beam to be emitted from the laser irradiation section 203a. The recording data generation section 205 adds an error correcting code to data to be recorded, thereby generating recording data.

The signal processing section 206 plays back data reflected on the reflected light detected by the photodetection section 203b. The error correction processing section 207 corrects an error contained in the play back data on the basis of the error correcting code contained in the data played back by the signal processing section 206. The error correction processing section 207 has an error detection section 207a and error line determination section 207b. The error detection section 207a detects the number of error bytes contained in play back data in one line on the basis of the error correcting code contained in the data played back by the signal processing section 206. The error line determination section 207b determines on the basis of the error detection result whether the played back line corresponds to an error line. For example, a line containing errors of 5 bytes or more is determined as an error line. When a line contains errors up to 4 bytes, the line can be corrected by the error correcting capability of the error correcting code. However, if a line contains more error bytes, it cannot be corrected by the error correcting code. For this reason, a line containing errors of 5 bytes or more is determined as an error line.

The focus/tracking control section 208 controls focus and tracking of a light beam emitted from the PUH 203 on the basis of the data played back by the signal processing section 206. The memory 209 stores various kinds of control information in advance. The memory 209 also stores various kinds of control information read out from the optical disk. The main control section 210 controls the information recording/playback apparatus on the basis of instructions from a host apparatus 3 and the various kinds of control information stored in the memory 209 to record desired information on the optical disk 1 or play back desired information recorded on the optical disk 1.

The overwrite will be described next.

Conventionally, disks with different formats have been prepared for different rewritable counts. For example, DVD-RAMs with a rewritable count of 100,000 times or more, DVD-RWs with a rewritable count of about 1,000 times, and once only-rewritable DVD-Rs are known. Such format classification poses the following problems.
(1) In the DVD-R/RW, even when a defective area is present on the disk, the drive cannot ensure the reliability of data because there is no defect management function at the hardware level. In principle, defect management can be performed by the file system. However, the process is actually cumbersome, and a sufficient data reliability cannot be obtained.
(2) A DVD-RAM has a defect management mechanism at the hardware level described above and therefore is excellent in ensuring the data reliability as compared to the DVD-R/RW. However, the rewritable count is larger than that of the DVD-R/RW, resulting in an increase in manufacturing cost.
(3) A recording medium is also used in an AV field where the cost of the medium is more important than the data reliability. In this case, high reliability of the DVD-RAM is disadvantageous in terms of cost.

In consideration of the above situations, to integrate the functions that are distributed to a plurality of media from the viewpoint of rewritable count, an overwritable count information area OA1 (rewritable capability field) made of, e.g., two bits is newly defined on the above-described optical disk. The following pieces of information are recorded in this overwritable count information area OA1.
00: 100,000 times overwritable
01: 1,000 times overwritable
10: only once recordable
11: reserved

Pieces of information of recording conditions and the like corresponding to these pieces of information are recorded in the lead-in area A1 and lead-out area A3.

The optical disk according to the embodiment of the present invention basically has the same structure as that of a conventional DVD-RAM, as described above. When the overwritable count information area OA1 is formed to classify disks in accordance with their recording characteristics, an appropriate process according to the overwritable count can be executed by the drive host. Hence, disks can be manufactured using a single physical format in accordance with cost and purpose.

For example, for a "00" (100,000 times overwritable) disk, the process operation, i.e., defect management of a conventional DVD-RAM can be executed using the PDL, SDL, and spare area. In a "01" (1,000 times overwritable) disk, the film surface rapidly degrades, and the PDL and SDL serving as defect management areas rapidly degrade, unlike a "00" disk. For this reason, the defect management capability is lower than that of the "00" disk. However, when the application purpose of the "01" disk is limited to AV, no spare area is used in recording AV data. The spare area is used only in the replacement process of a limited data such as management data or file system, and the degradation in PDL and SDL is no serious problem. The overwrite count information area OA2 for storing overwrite count information representing the actual number of times of overwrite is prepared in the areas of the PDL and SDL arranged at fixed positions on the physical format. This can be used as an index of use limit in terms of the system. For example, each of the PDL and SDL has an update counter. It is incremented by one upon updating. This counter may be used as overwrite count information. For a "01" disk, re-formatting is preferably inhibited to prevent the update counter from being cleared by re-formatting. No defect management is performed in recording AV data because it assumes seamless playback. For seamless playback, AV data must be recorded in continuous physical areas as much as possible. That is, no replacement process can be performed by moving the optical head to the spare area separated from the recording source address by, e.g., secondary replacement. A "10" (only-once recordable) disk corresponds to a write-once medium. Its recording process is different from that of a "00" and "01" media, though the defect management function can be used. That is, the "10" disk has a DVD-RAM structure, and only its film characteristic is "write-once". When the data in a defective sector is written in the spare area, and defect management information is also written in the DMA, recording can be executed with higher data reliability than the conventional R media.

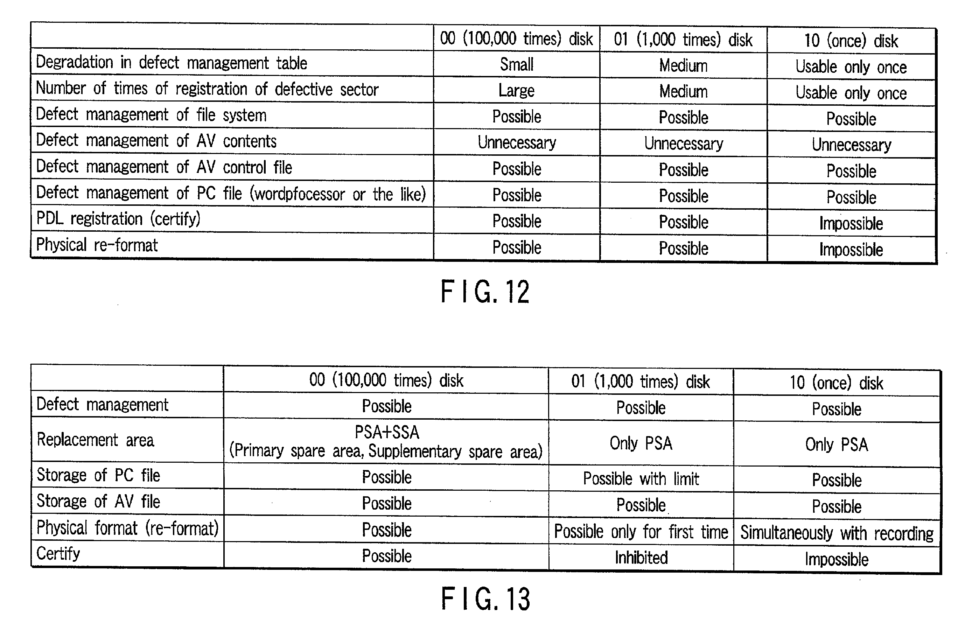

As described above, when the process is changed depending on the overwritable count, the cost can be optimized while effectively using a single format. FIG. 12 shows the characteristics from the viewpoint of defect management close to film degradation.

As described above, defect management can be executed in all disks although the capability changes depending on the overwritable count.

For actual operation, for example, certification and physical re-formatting may be inhibited in a "01" (1,000 times) disk. With this arrangement, a maximum number of sectors physically continue, and the values of the update counters in the PDL and SDL are held. In the "01" disk, the number of registered defects is limited as compared to a "00" disk. To prevent wasteful registration as much as possible, a predetermined limitation may be imposed against recording of a PC file such that a file cannot undergo defect management unless a special command is used. FIG. 13 shows operation examples from such a viewpoint.

Basically, the three disks have the same physical format, i.e., the same format as a conventional DVD-RAM.

A defect management process sequence of a "10" (once) disk will be described.
(1) Data sent from the host to the drive is recorded in sectors on a disk.
(2) Verification is executed to check whether the data is correctly recorded. If the data is not correctly recorded, it is recorded in a replacement sector (spare area). After recording in the replacement sector, the same check as described above is executed. If it is confirmed that the data is correctly recorded, the combination of the replacement source address and the replacement destination address is stored in the memory on the drive.
(3) When process (2) is ended for all data, pieces of defect management information held in the memory are recorded in the (four) SDLs at once, and the process is ended.

In the above description, the overwritable count is identified using three 2-bit data. The number of bits may be increased. A field (e.g., four bytes) that directly describes the overwritable count may be formed.

Points of the information recording medium, information recording apparatus, and information playback apparatus according to the embodiment of the present invention will be summarized below.

First, the points of the information recording medium (optical disk) will be summarized.

At least one of the emboss data zone and rewritable data zone of the lead-in area A1 of the optical disk has the overwritable count information area OA1. This overwritable count information area OA1 stores overwritable count information representing the allowable number of times of overwrite. The rewritable data zone of the lead-in area A1 of the optical disk (information recording medium) has the overwrite count information area OA2. This overwrite count information area OA2 stores overwrite count information representing the actual number of times of overwrite. The above-described update counter may be applied to the overwrite count information.

The size of the spare area may be determined in accordance with the overwritable count information stored in the overwritable count information area OA1. When "00" is recorded in the overwritable count information area OA1, i.e., for a disk that is overwritable 100,000 times, the spare area size information is recorded such that the spare area has the first size. That is, the first address and final address (or length) of the spare area are recorded such that the spare area has the first size. When "01" is recorded in the overwritable count information area OA1, i.e., for a disk that is overwritable 1,000 times, the spare area size information is recorded such that the spare area has the second size smaller than the first size. That is, the first address and final address (or length) of the spare area are recorded such that the spare area has the second size. When "10" is recorded in the overwritable count information area OA1, i.e., for a once-writable disk, the spare area size information is recorded such that the spare area has the third size smaller than the second size. That is, the first address and final address (or length) of the spare area are recorded such that the spare area has the third size. The smaller the recordable count becomes, the smaller the required capacity of the spare area becomes. Hence, the spare area size is made changeable.

Second, the points of the information recording apparatus (information recording/playback apparatus) will be summarized.

Under the control of the main control section 210, the information recording/playback apparatus records overwrite count information in the overwrite count information area OA2 in accordance with an overwrite. For example, the information recording/playback apparatus updates the update counter upon a rewrite of the DMA.

Additionally, under the control of the main control section 210, the information recording/playback apparatus inhibits re-formatting of the information recording medium when it is found on the basis of the overwritable count information stored in the overwritable count information area OA1 that the overwritable count is smaller than a predetermined count. For example, when "01" is recorded in the overwritable count information area OA1, i.e., for a disk that is overwritable 1,000 times, re-formatting is inhibited.

Furthermore, under the control of the main control section 210, the information recording/playback apparatus constrains recording of a predetermined file in accordance with the overwritable count information stored in the overwritable count information area OA1. For example, when "01" is recorded in the overwritable count information area OA1, i.e., for a disk that is overwritable 1,000 times, PC file recording is limited. In recording a PC file, an enormous number of times of rewrite occur due to defect management and the like. For this reason, if PC file recording is unconditionally permitted, the rewrite count easily exceeds the rewritable count.

Third, the points of the information playback apparatus (information recording/playback apparatus) will be summarized.

Under the control of the main control section 210, the information recording/playback apparatus plays back overwritable count information from the overwritable count information area OA1. The playback overwritable count information may be, e.g., externally displayed. The information recording/playback apparatus also plays back overwrite count information from the overwrite count information area OA2. The playback overwrite count information may be, e.g., externally displayed.

According to the above-described embodiment, the following medium and apparatuses can be obtained.
(1) An information recording medium capable of having different recording characteristics without increasing the load on the recording/playback apparatus side.
(2) An information recording apparatus capable of recording information on an information recording medium having different recording characteristics.
(3) An information playback apparatus capable of playing back information from an information recording medium having different recording characteristics.

## Claims

1. An information recording medium **characterized by** comprising:
a user area (UA) for recording user data; and
an overwritable count information area (OA1) for recording overwritable count information representing an allowable number of times of overwrite.

2. A medium according to claim 1, **characterized by** further comprising an overwrite count information area (OA2) for recording overwrite count information representing the actual number of times of overwrite.

3. A medium according to claim 1, **characterized by** further comprising
a spare area (SA) for compensating for a defective area that exists in said user area, and
a defect management area (DMA1 to 4) for managing information representing a position of a predetermined defective area and information representing a position of a predetermined replacement area in said spare area, which serves as a replacement destination of the predetermined defective area, while linking these pieces of information to each other.

4. A medium according to claim 2, **characterized by** further comprising
a spare area (SA) for compensating for a defective area that exists in said user area, and
a defect management area (DMA1 to 4) for managing information representing a position of a predetermined defective area and information representing a position of a predetermined replacement area in said spare area, which serves as a replacement destination of the predetermined defective area, while linking these pieces of information to each other.

5. A medium according to claim 1, **characterized by** further comprising a size information area (a2) for recording size information representing a size of a spare area, which is determined in accordance with the overwritable count information recorded in said overwritable count information area.

6. A medium according to claim 2, **characterized by** further comprising a size information area (a2) for recording size information representing a size of a spare area, which is determined in accordance with the overwritable count information recorded in said overwritable count information area.

7. A medium according to claim 1, **characterized by** further comprising a size information area (a2) for storing first size information that determines a size of a spare area to a first size when the overwritable count information recorded in said overwritable count information area indicates a first overwritable count, and for storing second size information that determines the size of the spare area to the second size smaller than the first size when the overwritable count information recorded in said overwritable count information area indicates a second overwritable count smaller than the first overwritable count.

8. A medium according to claim 2, **characterized by** further comprising a size information area (a2) for storing first size information that determines a size of a spare area to a first size when the overwritable count information recorded in said overwritable count information area indicates a first overwritable count, and for storing second size information that determines the size of the spare area to the second size smaller than the first size when the overwritable count information recorded in said overwritable count information area indicates a second overwritable count smaller than the first overwritable count.

9. An information recording apparatus **characterized by** comprising:
a recording section (203a, 204) configured to record information on an information recording medium; and
a recording instruction section (210) configured to instruct recording of overwrite count information in an overwrite count information area included in the information recording medium upon overwrite.

10. An apparatus according to claim 9, **characterized by** further comprising a replacement recording section (203a, 204) configured to record information to be recorded in a predetermined defective area that exists in a user area included in the information recording medium in a predetermined replacement area in a spare area included in the information recording medium, which serves as a replacement destination of the predetermined defective area, and to record, in a defect management area included in the information recording medium, information representing a position of the defective area and information representing a position of the predetermined replacement area while linking these pieces of information to each other.

11. An apparatus according to claim 9, **characterized by** further comprising a re-formatting inhibit control section (210) configured to inhibit re-formatting of the information recording medium when it is found, on the basis of the overwritable count information stored in the overwritable count information area included in the information recording medium, that the overwritable count is smaller than a predetermined count.

12. An apparatus according to claim 10, **characterized by** further comprising a re-formatting inhibit control section (210) configured to inhibit re-formatting of the information recording medium when it is found, on the basis of the overwritable count information stored in the overwritable count information area included in the information recording medium, that the overwritable count is smaller than a predetermined count.

13. An apparatus according to claim 9, **characterized by** further comprising a recording control section (210) configured to limit recording of a predetermined file in accordance with the overwritable count information stored in the overwritable count information area included in the information recording medium.

14. An apparatus according to claim 10, **characterized by** further comprising a recording control section (210) configured to limit recording of a predetermined file in accordance with the overwritable count information stored in the overwritable count information area included in the information recording medium.

15. An information playback apparatus **characterized by** comprising:
a playback section (203b, 204) configured to play back information from an information recording medium; and
a first playback instruction section (210) configured to instruct playback of overwritable count information recorded in an overwritable count information area included in the information recording medium.

16. An apparatus according to claim 15, **characterized by** further comprising a second playback instruction section (210) configured to instruct playback of overwrite count information recorded in an overwrite count information area included in the information recording medium.
